Europäisches Patentamt

European Patent Office

Office européen des brevets

(11) Veröffentlichungsnummer: **0 341 192**

**A1**

(12) # EUROPÄISCHE PATENTANMELDUNG

(21) Anmeldenummer: 89710035.0

(22) Anmeldetag: 29.04.89

(51) Int. Cl.⁴: **B 01 D 27/06**
B 01 D 29/06

(30) Priorität: 04.05.88 DE 3815145
04.05.88 DE 3815146

(43) Veröffentlichungstag der Anmeldung:
08.11.89 Patentblatt 89/45

(84) Benannte Vertragsstaaten: **ES**

(71) Anmelder: **KNECHT Filterwerke GmbH**
**Haldenstrasse 48**
**D-7000 Stuttgart 50 (DE)**

(72) Erfinder: **Widmann, Sigbert**
**Schillerstrasse 27**
**D-7322 Donzdorf (DE)**

(74) Vertreter: **Pfusch, Volker, Dipl.-Ing.**
**MAHLE GMBH Patentabteilung Pragstrasse 26-46**
**Postfach 50 07 69**
**D-7000 Stuttgart 50 (DE)**

(54) **Bahnenförmiges Filtermaterial mit eingeformten Sicken und Filterkörper aus diesem Material.**

(57) Bei einem bahnenförmigen Filtermaterial, insbesondere Filterpapier für Flüssigkeits- oder Gasfilter mit eingeformten Sicken (3, 4), bei dem das Filtermaterial (1) zick-zack-förmig in einzelne Abschnitte gefaltet ist, und bei dem diese Abschnitte über die Sicken (3, 4) in Abstand zueinander gehalten sind, sollen die Steifigkeit und die Festigkeit der Sicken (3, 4) erhöht werden, um einen Verlust der Abstandshalterwirkung der Sicken nach längeren Betriebszeiten zu verhindern.

Zu diesem Zweck sind die Sicken einer Kettenlinie folgend gewölbt.

Ferner sollen die Sicken insbesondere so geformt sein, daß jede anströmseitig aus der Filtermaterialbahn rausragende Anströmsicke (3) an ihren Längsseiten jeweils in eine aus der anderen Seite der Filtermaterialbahn herausragende Abströmsicke (4) übergeht, wobei die gleichen Höhen der Abströmsicken (4) kleiner als die gleichen Höhen der Anströmsicken (3) sind und daß benachbarte aufeinanderliegende Bahnen jeweils mit ihren Anström- und andererseits mit ihren Abströmsicken gegeneinanderstoßen.

Fig. 4

## Beschreibung

## Bahnenförmiges Filtermaterial mit eingeformten Sicken und Filterkörper aus diesem Material

Die Erfindung betrifft bahnenförmiges Filtermaterial, insbesondere Filterpapier für Flüssigkeits- oder Gasfilter, mit eingeformten Sicken nach dem Oberbegriff des Patentanspruchs 1 sowie Filterkörper aus diesen Materialien nach den Oberbegriffen der Patentansprüchen 7 und 10.

Sicken in Filterpapieren weisen bisher jeweils halbkreisförmige Querschnitte auf (beispielsweise DE-OS 19 30 715). Die Papierdicke ist bei solchen Sicken jeweils beim Übergang von der unverformten ebenen Filterfläche in die Sicke hinein am geringsten, wodurch es an diesen im Filterbetrieb statisch und dynamisch hochbelasteten Stellen zu materialbedingten Filtrationsstörungen kommen kann.

Filterkörper aus zick-zack-förmig gefalteten mit Sikken versehenen Bahnenmaterial sind ebenfalls beispielsweise aus DE-PS 12 48 618 bekannt.

Soweit darüber hinaus aus DE-OS 19 22 976 und DE-OS 26 51 910 Filterkörper mit gesickten Filterbahnmaterialien bekannt sind, weisen diese bei extremen Be triebsbeanspruchungen keine ausreichende Stabilität auf.

Hiervon ausgehend liegt der Erfindung die Aufgabe zugrunde, die Filterbahnmaterialien derart mit Sicken zu versehen und zu Filterkörpern mit zick-zack-förmig gelegten Falten zu formen, daß eine hohe statische Stabilität der Falten des Filterkörpers bei gleichzeitig durch die Sicken unbeschädigtem Filtermaterial erzielbar ist.

Gelöst wird diese Aufgabe zum einen durch eine Ausbildung der Sickenformen nach dem kennzeichnenden Teil des Patentanspruchs 1 und zum anderen durch die Anordnung und Form der Sicken innerhalb des Bahnenmaterials und dessen zick-zack-mäßige Faltung zu einem Filterkörper nach den kennzeichnenden Teilen der Patentansprüche 7, 8 und 10.

Zweckmäßige Ausgestaltungen der Erfindung sind Gegenstand der Unteransprüche.

Ausführungsbeispiele der Erfindung sind in der Zeichnung dargestellt.

Es zeigen

Fig. 1 einen senkrecht zur Ebene der Filterbahn verlaufenden Querschnitt durch eine Sikke

Fig 2 eine Draufsicht auf einen Teil einer Filtermaterialbahn

Fig 3 einen Schnitt durch die Filtermaterialbahn nach Linie III - III in vergrößertem Maßstab

Fig 4 eine perspektivische Ansicht auf einen Ausschnitt einer zick-zack-förmig gefalteten Filterbahn

Fig 5 eine Ansicht auf die Stirnseite eines zick-zack-förmig gefalteten Filterkörpers

Fig 6 einen Schnitt nach Linie VI -VI durch die Falten des Filterkörpers nach Fig. 5

Fig 7 eine Ansicht auf die Stirnseite einer alternativen Ausführung eines zick-zack-förmig gefalteten Filterkörpers

Fig 8 einen Schnitt nach Linie VIII -VIII durch die Falten des Filterkörpers nach Fig. 7

Fig 9 eine Ansicht auf die Stirnseite einer weiteren Ausführung eines zick-zack-förmig gefalteten Filterkörpers

Fig. 10 einen Schnitt nach Linie X - X durch die Falten des Filterkörpers nach Fig. 9

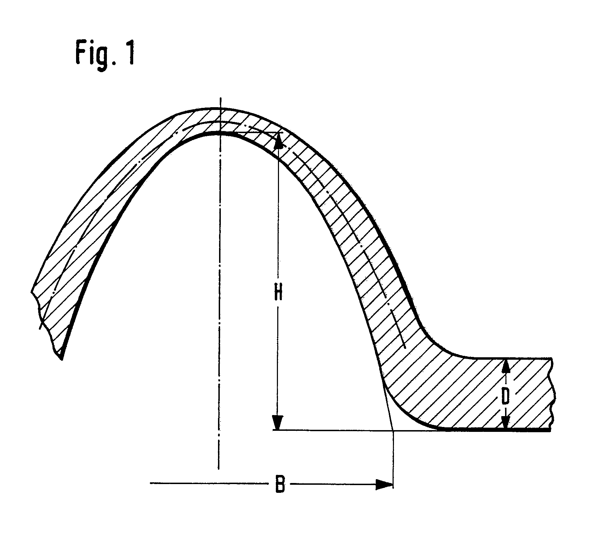

Bei der in Fig. 1 im Querschnitt dargestellten Sicke ist der Verlauf der Kettenlinie, die hier der Form der Wölbung der Sicke bestimmt, strichpunktiert eingetragen.

Eine Kettenlinie ist ein mathematischer Begriff und durch den Verlauf einer durch das Eigengewicht belasteten Kette mit unendlich vielen Gliedern definiert. Eine solche Kettenlinie wird teilweise auch als Seillinie bezeichnet.

Durch die Anpassung der Wölbung der Sicke an den Verlauf einer Kettenlinie wird eine wesentliche Erhöhung der Eigenstabilität gegenüber bekannten Sickenformen erzielt.

Mit H ist in Fig. 1 die Sickenhöhe, mit B die Sickenbreite und mit D die Filterpapierdicke jeweils bezeichnet.

Bei der Ausführung nach Fig. 1 weist das Filtermaterial in senkrecht zur Bahnebene gelegten Querschnitten eine Dicke auf, die innerhalb des Bereiches der Sicken ausgehend von den unverformten Filterbahnabschnitten bis hin zu der Zenithhöhe H der Sicke stetig abnimmt, wobei das Filtermaterial im Sinne der abnehmenden Dicke zunehmend verdichtet ist.

Bei dieser Ausführung ist darüber hinaus senkrecht zur Filterbahnebene einer durch eine Sicke gelegten Querschnittsebene eine maßliche Dickenverminderung in Richtung der Zenithöhe H der Sicke gegeben.

Bei einer länglich ausgerichteten Sicke ist die Dicke zumindest in den quer zur Längsrichtung gegenüberliegenden Flanken der Sicke bei jeweils gleichem senkrechten Abstand zur unverformten Filterbahnebene jeweils gleich.

Die Sicken weisen eine Breite B innerhalb der ungeprägten Filterbahnebene auf, die zu der Zenithöhe H in einem Verhältnis von kleiner als 2 steht.

Im Zenit der in Fig. 1 dargestellten Sicke ist die Dicke des Filtermaterials weniger als 80% der Dicke des unverformten Filtermaterials.

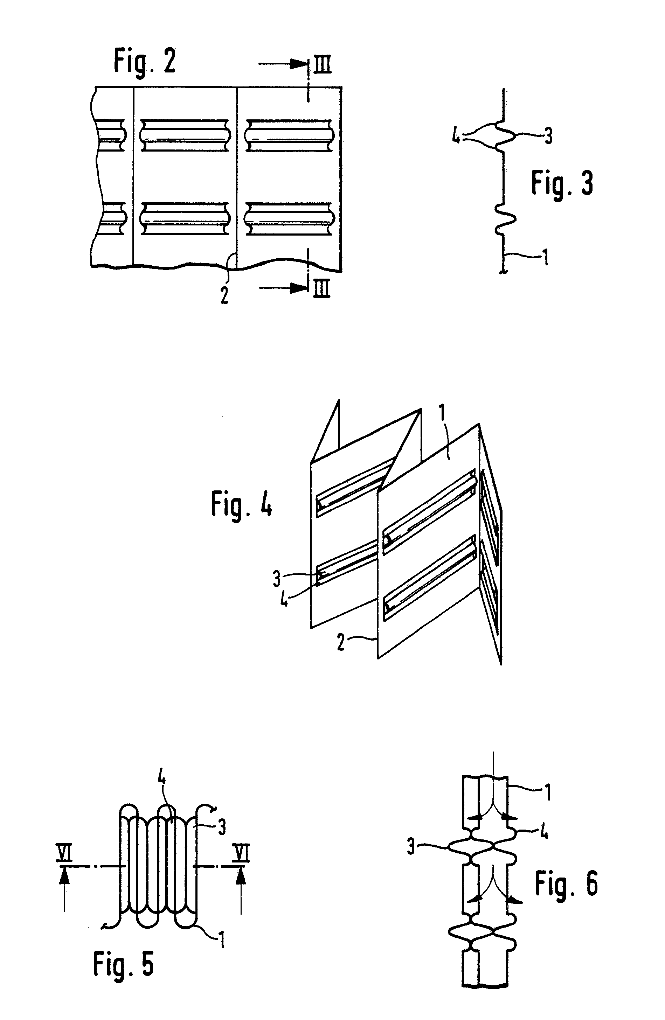

Nachfolgend wird das in den Fig. 2 - 6 dargestellte Filterbahnmaterial und dessen Art einer zick-zack-förmigen Faltung beschrieben.

Das Filterbahnmaterial 1 ist quer zu seiner Längserschreckung mit einzelnen Faltlinien versehen, um die das Bahnmaterial zick-zack-förmig aufgefaltet werden kann. In das Bahnmaterial rechtwinklig zu den Faltli nien 2 eingeprägt sind einzelne Doppelsicken. Diese Doppelsicken bestehen aus einer in einem betriebsbereiten Filter auf der Anströmseite zu liegen kommenden Anströmsicke 3 und zwei sich von den Flanken dieser Sicke direkt auf die andere Seite der Filterbahn erstreckenden Abströmsicken 4.

Die Anströmsicke 3 erstreckt sich weiter auf der Materialbahn senkrecht heraus als die beiden jeweils zugeordneten Abströmsicken 4.

In zick-zack-förmig gefaltetem Zustand der Filtermaterialbahn 1 liegen anströmseitig die Anströmsikken 3 zweier benachbarter Faltenabschnitte zusammen, während abströmseitig die Abstützung über die kleineren Abströmsicken 4 erfolgt.

Die Anordnung der Sicken 3 und 4 ermöglicht insbesondere auf der Abströmseite eine über die Breite der Filterbahn symmetrische Abstützung der einzelnen Filterbahnfaltenabschnitte. Dadurch kann bei Aufrechterhaltung einer großen freien Filterfläche ein gegen Kollabieren der Filterbahnfaltenabschnitte äußerst sicheres Abstützen erreicht werden.

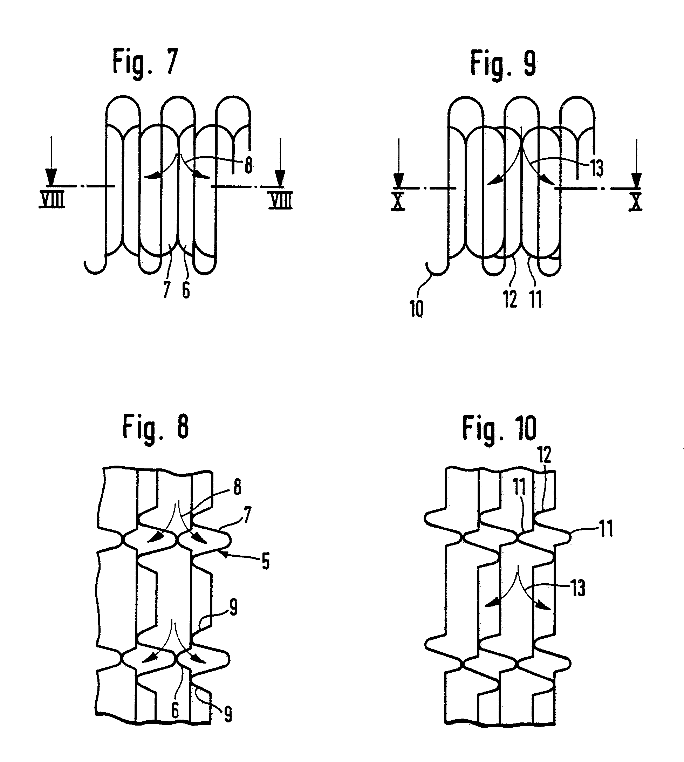

Die Ausführung nach den Fig. 7 und 8 ist wie folgt aufgebaut. Das Filterbahnmaterial ist quer zu seiner Längserstreckung in einzelne Falten gelegt. Die W-förmigen Sicken 5 wechseln sich in Längsrichtung der Filterbahn in gleichem Abstand alternierend mit V-förmigen Sicken 6 ab. Die einseitige Erhebung 7 der W-förmigen Sicken 5 sowie die V-förmige Sicke 6 ragen jeweils anströmseitig aus dem Filterbahnmaterial heraus. Die Strömungsrichtung des Filterbahnmaterials geben die Pfeile 8 an.

Die Falten sind jeweils so gelegt, daß die abströmseitigen Erhebungen 9 der Sicke 5 abströmseitig an dem Fuß der V-förmigen Sicke 6 anliegen.

Die Anordnung der Sicken 5 und 6 ermöglicht insbesondere auf der Abströmseite zwischen den einzelnen Sikken eine symmetrische Abstützung der einzelnen Filterbahnfaltenabschnitte. Dadurch kann bei Aufrechterhaltung einer großen freien Filterfläche ein gegen Kollabieren der Filterbahnabschnitte äußerst sicheres Abstützen erreicht werden. Darüber hinaus steht anströmseitig ein größerer Strömungsraum zur Verfügung als jeweils abströmseitig zwischen den einzelnen Falten.

Die Ausführung nach den Fig. 9 und 10 sieht wie folgt aus.

Das Filterbahnmaterial 10 ist quer zu seiner Längserstreckung zick-zack-förmig gefalten. An- und abströmseitig ragen jeweils Sicken 11 bzw. 12 aus der Filterbahn heraus. Die Durchströmrichtung des Filtermaterials ist durch Pfeile 13 markiert. Die Faltung des Bahnmaterials ist derart gelegt, daß die anströmseitig herausragenden Sicken 11 abströmseitig jeweils an ihren Fußbereichen und anströmseitig jeweils an ihrem Kopfbereich aneinanderliegen.


## Patentansprüche

1. Bahnenförmiges Filtermaterial, insbesondere Filterpapier, mit eingeformten Sicken für Flüssigkeits- oder Gasfilter, bei denen das Filtermaterial zick-zack-förmig gefaltet und die einzelnen Faltenabschnitte über die Sicken in Abstand zueinander gehalten sind,
dadurch **gekennzeichnet,**
daß die Sicken zumindest in einer senkrecht zur unverformten Filterbahn verlaufenden Querschnittsebene von der Filterbahnebene ausgehend einer Kettenlinie folgend gewölbt sind.

2. Filterbahnmaterial nach Anspruch 1,
dadurch **gekennzeichnet,**

daß die Sicken eine Breite (B) innerhalb der ungeprägten Filterbahn aufweisen, die zu der Zenithöhe (H) in einem Verhältnis von kleiner als 2 steht.

3. Filtermaterial nach Anspruch 1 oder 2,
dadurch **gekennzeichnet,**
daß das Filtermaterial in senkrecht zur Bahnebene gelegten Querschnitten eine Dicke aufweist, die innerhalb des Bereiches der Sicken ausgehend von den unverformten Filterbahnabschnitten bis hin zu einer Zenithöhe (H) der einzelnen Sicken stetig abnimmt, und daß dabei das Filtermaterial im Sinne der abnehmenden Dicke zunehmend verdichtet ist.

4. Filtermaterial nach Anspruch 3,
dadurch **gekennzeichnet,**
daß in jeder senkrecht zur Filterbahnebene durch eine Sicke gelegten Querschnittsebene eine maßlich gleiche Dickenverminderung in Richtung einer jeden Zenithöhe (H) der einzelnen Sicke gegeben ist.

5. Filtermaterial nach Anspruch 1,
dadurch **gekennzeichnet,**
daß bei länglich ausgerichteten Sicken die Dicke zumindest in den quer zur Längsrichtung gegenüberliegenden Flanken einer Sicke bei jeweils gleichem senkrechten Abstand der unverformten Filterbahnebene jeweils gleich ist.

6. Filtermaterial nach einem der Ansprüche 3 - 5,
dadurch **gekennzeichnet,**
daß die Dicke des Filtermaterials im Zenit der Sicken weniger als 80% der Dicke des unverformten Filtermaterials beträgt.

7. Filterkörper aus einer zick-zack-förmig gefalteten Bahn eines relativ dünnwandigen Filtermaterials, das sowohl auf der Anströmseite als auch auf der Abströmseite zwischen den Faltenkanten je weils aus der Bahnebene herausragende längliche Sicken zum gegenseitigen Abstand der Falten aufweist und bei dem zwischen den Sicken der gleiche Faltenfläche unverformte ebene Abschnitte bestehen,
dadurch **gekennzeichnet,**
daß jede anströmseitig aus einer Filtermaterialbahn herausragende Anströmsicke (3) an ihren beiden Längsseiten jeweils in eine aus der anderen Seite der Filtermaterialbahn herausragende Abströmsicke (4) übergeht, wobei die gleichen Höhen der Abströmsicken (4) kleiner als die gleichen Höhe der Anströmsicken (3) sind und daß benachbarte aufeinanderliegende Bahnen jeweils einerseits mit ihren Anström- und andererseits mit ihren Abströmsicken gegeneinanderstoßen.

8. Filterkörper nach dem Oberbegriff des Anspruchs 7,
dadurch **gekennzeichnet,**
daß in Bahnenlängsrichtung verlaufend alternierend V- und und W-förmige Sicken (5 bzw. 6) angeordnet sind, und daß jede W-förmige Sicke (5) aus einer anströmseitig aus der Filtermaterialbahn herausragenden Erhebung (7) besteht, die an jeder ihrer beiden Längsseiten jeweils in eine abströmseitig aus der Filtermaterialbahn herausragende Erhebung (9) übergeht, wobei die beiden abströmseitigen Erhebungen (9) jeweils gleich hoch sind, und daß ferner die V-förmigen Sicken (6) lediglich anströmseitig aus der Filtermaterialbahn herausragen, wobei die Spannweite zwischen den V- Schenkeln beim Übergang in die Filterbahn kleiner oder gleich der maximalen Spannweite zwischen den langen Schenkeln der W-förmigen Sicke ist und daß die Faltenlinien so angebracht sind, daß die Sikken (5, 6) jeweils symmetrisch aufeinander zu liegen kommen.

9. Filterkörper nach Anspruch 8,
dadurch **gekennzeichnet,**
daß die anströmseitig die V- und W-Sicken jeweils gleich hoch aus der Filtermaterialbahnebene herausragen

10. Filterkörper aus einer zick-zack-förmig gefalteten Bahn eines relativ dünnwandigen Filtermaterials, das sowohl auf der Anströmseite als auch auf der Abströmseite zwischen den Faltenkanten jeweils aus der Bahnebene herausragende längliche in der Filterbahnebene jeweils ineinander übergehende nebeneinanderliegende Sicken zum gegenseitigen Abstandhalten der Falten aufweist und bei dem zwischen den jeweils aneinanderliegenden Sikkenpaaren innerhalb der gleichen Faltenfläche unverformte ebene Abschnitte vorhanden sind, **gekennzeichnet** durch eine Faltung des Filterbahnmaterials (10), bei der die anströmseitig herausragenden Sicken (11) sich gegenseitig abströmseitig mit jeweils ihren Fußbereichen und anströmseitig mit ihrem jeweiligen Kopfbereich abstützen.

11. Filterkörper nach Anspruch 10,
dadurch **gekennzeichnet,**
daß die Höhe der anströmseitig herausragenden Sicken (11) größer als diejenige der abströmseitigen Sicken (12) ist.

# Fig. 1

**Fig. 2**

**Fig. 3**

**Fig. 4**

**Fig. 5**

**Fig. 6**

## Fig. 7

## Fig. 9

## Fig. 8

## Fig. 10

| Europäisches Patentamt | EUROPÄISCHER RECHERCHENBERICHT | Nummer der Anmeldung |
|---|---|---|
| | | EP 89 71 0035 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 849 314 (F.G. NICCUM et al.) * Zusammenfassung; Spalte 1, Zeile 38 - Spalte 2, Zeilen 27,53-55; Figuren 1-4 * --- | 1,3-5,7 | B 01 D 27/06 B 01 D 29/06 |
| A | FR-A-2 175 902 (GENERAL MOTORS) * Seite 1, Zeilen 1-11; Seite 4, Zeile 23 - Seite 5, Zeile 14; Seite 6, Zeilen 1-18; Seite 7, Zeilen 16-21; Figuren 1-4,9,10 * --- | 1,3-5,7 | |
| A | US-A-4 732 678 (K.E. HUMBERT) * Spalte 1, Zeilen 40-52; Spalte 3, Zeile 36 - Spalte 4, Zeile 11; Figuren 3A-5 * --- | 1,7-11 | |
| A,D | DE-A-1 922 976 (FILTERWERK MANN & HUMMEL GmbH) * Seite 4, letzte Absatz - Seite 5, Absatz 2; Figuren 2-4 * ----- | 1,7-11 | |

RECHERCHIERTE SACHGEBIETE (Int. Cl.4)

B 01 D

Der vorliegende Recherchenbericht wurde für alle Patentansprüche erstellt

| Recherchenort | Abschlußdatum der Recherche | Prüfer |
|---|---|---|
| DEN HAAG | 11-07-1989 | MARZENKE J. |